# EUROPÄISCHE PATENTANMELDUNG

(11) **EP 4 599 917 A1**
(43) Veröffentlichungstag der Anmeldung: **13.08.2025**
(21) Anmeldenummer: 25156265.8
(22) Anmeldetag: 06.02.2025
(51) Int. Cl.: B01D 46/24

(54) **FILTERKERZE MIT VERSTÄRKTEM KRAGEN**

(30) Priorität: 08.02.2024 DE 102024103554
(71) Anmelder: Rath GmbH, 01662 Meissen (DE)
(72) Erfinder: SALINGER, Manfred, 74564 Craisheim (DE); DABORER, Andreas, 3375 Krummussdaum (AT)
(74) Vertreter: Davepon, Björn

(57) **Zusammenfassung**

Die vorliegende Erfindung betrifft ein Filterelement (1), insbesondere Filterkerze zur Filtration von Abgasen oder Prozessgasen, mit einem Filterkörper, der an einem Ende geschlossen und an seinem gegenüberliegenden Ende offen ausgebildet ist, wobei an dem offenen Ende des Filterkörpers ein nach außen abstehender Kragen (4) angeformt ist und der Filterkörper zumindest in einen den Kragen (4) beinhaltenden Kragenabschnitt (3) und einen mit diesem verbundenen Filterabschnitt (2) unterteilt ist, dadurch gekennzeichnet, dass der Kragenabschnitt (3) eine höhere O-Ring-Festigkeit aufweist als der Filterabschnitt (2), wobei die O-Ring-Festigkeit wie in der Beschreibung definiert bestimmt ist. Die Erfindung betrifft ferner ein Verfahren zur Herstellung eines solchen Filterelements sowie dessen Verwendung und ferner die Verwendung eines Kragenabschnitts mit einer höheren O-Ring-Festigkeit als der Filterabschnitt, für ein solches Filterelement.

## Beschreibung

Die vorliegende Erfindung betrifft ein Filterelement, insbesondere eine Filterkerze zur Filtration von Abgasen oder Prozessgasen, mit einem Filterkörper, der an einem Ende geschlossen und an seinem gegenüberliegenden Ende offen ausgebildet ist, wobei an dem offenen Ende des Filterkörpers ein nach außen abstehender Kragen angeformt ist und der Filterkörper zumindest in einen den Kragen beinhaltenden Kragenabschnitt und einen mit diesem verbundenen Filterabschnitt unterteilt ist. Die Erfindung betrifft ferner ein Verfahren zur Herstellung eines solchen Filterelements sowie dessen Verwendung und ferner die Verwendung eines Kragenabschnitts mit einer höheren O-Ring-Festigkeit als der Filterabschnitt, für ein solches Filterelement.

Prozess- oder Abgase treten in den verschiedensten Bereichen der Industrie auf, beispielsweise Abgase von Feuerungsanlagen, Gasturbinen, Müllverbrennungsanlagen und Verbrennungsmotoren. Aufgrund von Umwelt-, Sicherheits- und Gesundheitsauflagen müssen solche Prozess- oder Abgase, oftmals als Rohgase bezeichnet, mechanisch und gegebenenfalls auch katalytisch nachbehandelt werden. Zur Reinigung von Prozess- oder Abgasen, die zumeist als Heißgase anfallen, sind aus dem Stand der Technik Filterelemente bekannt, mit denen in dem Rohgas enthaltene giftige Schadstoffe mittels Katalyse und/oder Feststoffpartikel oder Stäube weitestgehend entfernt werden. Bei derartigen Filterelementen handelt es sich häufig um sogenannte Filterkerzen, die Bestandteil eines größeren Filtermoduls oder Filtersystems sein können. Innerhalb eines solchen Filtermoduls sind die Filterkerzen häufig an ihrem einen Ende aufgehängt.

Aus den unterschiedlichsten Erwägungen, insbesondere aus prozesstechnischen Gründen, sind lange Filterelemente wünschenswert, die beispielsweise eine Länge von mehreren Metern aufweisen. Denn mit einer zunehmenden Länge der Filterelemente lässt sich beispielsweise eine höhere Filterleistung erzielen. Um derart lange Filterelemente zu erhalten, ist es bekannt, einen eine Längsrichtung definierenden Filterkörper eines Filterelementes entlang der Längsrichtung in mehrere im Wesentlichen rohrförmige Filterkörperelemente zu unterteilen. Die Filterkörperelemente sind dabei jeweils paarweise an ihren zueinander weisenden Endabschnitten verbunden, so dass insbesondere ein hohlzylindrischer Filterkerzenkörper ausgebildet wird.

In der DE 87 15 130 wird die Verbindung da- durch realisiert, dass die Filterkörperelemente endseitig ineinandergeschoben und zusätzlich miteinander verklebt sind. Da das Filterelement während seines Betriebs aufgehängt ist und die Gravitationskraft parallel zu dessen Längsrichtung wirkt, ist eine derartige Klebeverbindung aufgrund des Eigengewichts der Filterkörperelemente hohen mechanischen Belastungen ausgesetzt. Dies kann zu einem Abbrechen und/oder Abfallen von Filterkörperelemente führen.

In der EP 0 730 896 A2 wird die Verbindung dadurch realisiert, dass die Filterkörperelemente mittels zusammenwirkender Innen- und Außengewinde miteinander verschraubt sind. Eine solche Schraubverbindung ist relativ stabil und löst sich auch bei einem hängenden Filterelement nicht oder nur sehr schwer. Jedoch kann durch eine reine Schraubverbindung nicht sichergestellt werden, dass der Trennspalt zwischen den durch Verschraubung verbundenen Filterkörperelementen derart abgedichtet ist, dass durch diesen keine Fluide von einem Außenbereich des Filterelementes in den Innen- raum des Filterelementes eindringen und/oder von dem Innenraum in den Außenbereich austreten können. Dies ist jedoch zur Erzielung einer hohen Filterleistung erforderlich.

Um diese Nachteile zu umgehen wird in der EP 3 448 542 B1 vorgeschlagen, mehrere Filterkörperelemente miteinander zu verschrauben und im Verschraubungsbereich zusätzlich zu verkleben. Hierdurch können Filterkerzen von beispielsweise 6 Meter Länge erstellt werden.

Dadurch können zwar sehr lange Filterelemente mit dementsprechend guter Filterleistung zur Verfügung gestellt werden, jedoch hat sich in manchen Fällen in der Praxis gezeigt, dass gerade wegen der großen Länge und dem damit verbundenen höheren Gewicht auch eine stärkere mechanische Belastung im Kragenbereich der Filterkerzen festzustellen ist, in welchem die Filterkerzen typischerweise im Filtermodul eingehängt sind. Hinzu kommt noch das zusätzliche Gewicht durch anhaftenden Staub. Wenn dann während des Betriebs noch wechselnde Abgasgeschwindigkeiten auftreten, kann es bei den Filterkerzen zu mechanischen Schwingungen kommen, wodurch der Kragenbereich zusätzlich belastet wird. Dies gilt insbesondere bei Anlagen, in denen die Filterkerzen seitlich angeblasen werden. Die Belastung kann im Einzelfall so weit gehen, dass im Kragenbereich Risse auftreten oder die Filterkerze womöglich im Kragenbereich bricht.

Um diesem Problem zu begegnen wurden am Markt zum Teil Heißgasfilter mit einer höheren Rohdichte angeboten, was beispielsweise über einen höheren Anteil an Fasern realisiert wurde. Dies hat jedoch Nachteile bei der Filterleistung, weil hierdurch der Differenzdruck zunimmt, was die Kosten im laufenden Betrieb erhöht.

Der Erfindung liegt somit die Aufgabe zugrunde, ein Filterelement der eingangsgenannten Art zur Verfügung zu stellen, welches auch bei großen Längen des Filterelements eine höhere Stabilität und mechanische Belastbarkeit besitzt und insbesondere im Kragenbereich widerstandsfähiger gegen das Auftreten von Rissen ist.

Diese Aufgabe wird erfindungsgemäß gelöst durch ein Filterelement, insbesondere Filterkerze zur Filtration von Abgasen oder Prozessgasen, mit einem Filterkörper, der an einem Ende geschlossen und an seinem gegenüberliegenden Ende offen ausgebildet ist, wobei an dem offenen Ende des Filterkörpers ein nach außen abstehender Kragen angeformt ist und der Filterkörper zumindest in einen den Kragen beinhaltenden Kragenabschnitt und einen mit diesem verbundenen Filterabschnitt unterteilt ist, wobei das Filterelement dadurch gekennzeichnet ist, dass der Kragenabschnitt eine höhere O-Ring-Festigkeit aufweist als der Filterabschnitt, wobei die O-Ring-Festigkeit wie in der Beschreibung definiert bestimmt ist.

Grundgedanke der Erfindung ist es also, den Kragenbereich mechanisch stabiler auszulegen als den restlichen Teil des Filterelements und auf diese Weise widerstandsfähiger gegen die vorgenannten Belastungen auszulegen. Dies kann durch verschiedene Maßnahmen erreicht werden, wie beispielsweise
- Wahl einer höheren Dichte des Materials des Kragenabschnitts verglichen mit dem Material des Filterabschnitts,
- Wahl eines Materials mit höherer Zugfestigkeit im Kragenabschnitt verglichen mit dem Material des Filterabschnitts,
- Einstellung einer anderen Flockungsgröße beim Vakuumformprozess des Kragenabschnitts verglichen mit dem Material des Filterabschnitts,
- Wahl einer höheren Füllstoffmenge für das Material des Kragenabschnitts verglichen mit dem Material des Filterabschnitts,
- Wahl eines höheren Faseranteils für das Material des Kragenabschnitts verglichen mit dem Material des Filterabschnitts und/oder
- Wahl eines Fasermaterials mit höherer Zugfestigkeit für das Material des Kragenabschnitts verglichen mit dem Material des Filterabschnitts.

Was die Möglichkeit der Einstellung einer anderen Flockungsgröße beim Vakuumformprozess des Kragenabschnitts verglichen mit dem Material des Filterabschnitts betrifft, so kann dies durch einen geringeren Feststoffanteil in der Suspension realisiert werden. Wenn weniger Feststoff in 1m³ Wasser geflockt wird, ergibt sich eine geringere Flockungsgröße. Das wird auch im Bereich der Papierindustrie angewandt. Details hierzu sind zu finden in "E.Gruber: Papierchemie, Vorlesungsskriptum zum Lehrgang Papiertechnik (Karlsruhe)", Version 2011-12, Seite 12-1.

Die O-Ring Festigkeit wird im Rahmen der vorliegenden Erfindung in der Weise bestimmt, wie sie im Beispielteil weiter unten offenbart ist.

Abweichend von der in der EP 3 448 542 B1 vorgeschlagenen Lösung kann der Kragenbereich nicht etwa gleichlang wir die weiteren Filterkörperelemente ausgestaltet werden, sondern deutlich kürzer, also beispielsweise lediglich in einer Länge von etwa 10 bis 100 cm. Dann kann nämlich für den Kragenbereich ein Material gewählt werden, das in erster Linie auf mechanische Belastbarkeit ausgelegt ist und dafür eine geringere oder gegebenenfalls kaum eine nennenswerte Filterleistung besitzt, da bei dem kurzen Kragenabschnitt der Verlust an Filterleistung bezogen auf die gesamte Länge der Filterkerze nicht so stark ins Gewicht fällt. Im Prinzip genügt es hierbei, wenn der Kragenabschnitt eine Länge aufweist, dass der Kragen oberhalb der Lochplatte herausragt und unterhalb der Lochplatte noch eine ausreichende Länge für eine Verbindung zum Filterabschnitt zur Verfügung steht, wie beispielsweise für eine Schraubverbindung zwischen diesen beiden Bauteilen.

Mit anderen Worten kann also der Kragenbereich separat geformt werden wodurch man beispielsweise nicht an die Rohdichte des restlichen Filterelementes gebunden ist. So kann der Kragenbereich mir einer deutlich höheren Rohdichte geformt werden, beispielsweise durch einen höheren Anteil an Fasern, wodurch sich die Festigkeit erhöht. Auch ist es so möglich, gezielt im Kragenbereich andere Rohstoffe als im Filterbereich, wie beispielsweise geschnittene Glasfasern, geschnittene Aluminiumoxid-Endlosfasern einzusetzen. Diese Fasern sind kostenintensiv und werden bei der erfindungsgemäßen Lösung nur im Bereich der größten Belastung benötigt. Wenn der Kragen eine höhere Rohdichte aufweist, ist hier auch der Differenzdruck höher, was jedoch aufgrund des geringen Anteils des Kragens an der Gesamtlänge der Filterkerze nicht so sehr ins Gewicht fällt. Dies gilt vor allem bei Ausgestaltungen, bei denen der Anteil des Kragens an der Gesamtlänge der Filterkerze höchstens 10%, bevorzugt höchstens 5%, beträgt. Vorzugsweise macht die Länge des Kragenabschnitts 3 bis 30% der Gesamtlänge des Filterelementes aus. Beispielsweise bei einer Filterkerze von 3 Metern Länge kann der Kragenabschnitt eine Länge von 10 cm bis 1,00 m betragen.

Der Filterkörper ist im Rahmen der vorliegenden Erfindung insbesondere zweiteilig ausgebildet und in einen Kragenabschnitt und einen mit diesem verbundenen Filterabschnitt unterteilt. Diese können dann vor dem Einsatz als Filterelement vor Ort miteinander verbunden werden.

Bei den mit dem erfindungsgemäßen Filterelement gefilterten Rohgasen kann es sich grundsätzlich um Abgase oder Prozessgase unterschiedlichster Temperaturen handeln. Das erfindungsgemäße Filterelement ist jedoch insbesondere zur Filtration von Abgasen oder Prozessgasen mit Temperaturen bis 750°C geeignet, vorzugsweise bis zu 900°C.

In vorteilhafter Ausgestaltung des erfindungsgemäßen Filterelements weist der Kragenabschnitt eine um wenigstens 3% höhere O-Ring-Festigkeit auf als der Filterabschnitt, insbesondere um 3% bis 50%, bevorzugt um wenigstens 4%, weiter bevorzugt um wenigstens 5% höher. Hierdurch kann eine besonders hohe Stabilität im Vergleich zu Filterelementen erreicht werden, bei denen Kragen und Filterkörper aus demselben Material gefertigt sind.

Es ist ferner bevorzugt, dass der Kragenabschnitt eine um wenigstens 35 N höhere O-Ring-Festigkeit aufweist als der Filterabschnitt, insbesondere um 35 bis 200 N, bevorzugt um wenigstens 40 N, weiter bevorzugt um wenigstens 45 N höher.

Vorzugsweise ist bei dem erfindungsgemäßen Filterelement die O-Ring-Festigkeit auf dieselbe Wandstärke beim Kragenabschnitt und Filterabschnitt bezogen.

In vorteilhafter Weiterbildung des erfindungsgemäßen Filterelements ist der Filterabschnitt in wenigstens zwei miteinander verbundene Abschnitte unterteilt. Dies erleichtert den Transport von besonders langen Filterelementen, die dann erst am Bestimmungsort zusammengesetzt werden.

Im Rahmen der vorliegenden Erfindung ist die Verbindung zwischen dem Kragenabschnitt und dem Filterabschnitt und/oder der Abschnitte des Filterabschnitts untereinander mittels an ihren benachbarten Endabschnitten ausgebildeten und zueinander korrespondierenden Innen- und Außengewinden, einer Verklebung, einer gegebenenfalls mit Stiften gesicherten Steckverbindung und/oder mittels eines Bajonettverschlusses realisiert. Dabei kann weiter bevorzugt der Kragenabschnitt und der Filterabschnitt und/oder die Abschnitte des Filterabschnitts untereinander zusätzlich in ihren Kontaktbereichen mittels eines Klebstoffs miteinander verklebt sein. Durch eine Verklebung wird die Stabilität der Verbindung zusätzlich erhöht. Durch die Verklebung ist ferner eine fluiddichte Verbindung und somit eine hohe Filterleistung sichergestellt.

Bei den Innen- und Außengewinden handelt es sich bevorzugt jeweils um ein Trapezgewinde, ein Rundgewinde und/oder ein Rechteckgewinde. Trapezgewinde haben eine relativ hohe Reibung und können daher selbsthemmend ausgelegt sein, so dass sie sich nicht von selbst lockern. Rundgewinde sind relativ widerstandsfähig, da sie keine filigranen Kanten aufweisen. Die Innen- und Außengewinde können in der Längsrichtung des Filterelements jeweils eine Länge von 50 bis 200 mm aufweisen.

Bei dem erfindungsgemäßen Filterelement kann ferner das Filterelement die Form einer Filterkerze mit einem im Wesentlichen hohlzylindrischen Filterkerzenkörper aufweisen, dessen geschlossenes Ende insbesondere halbkugelartig ausgebildet ist.

Bei dem Filterelement der vorliegenden Erfindung kann der Kragen nach außen radial abstehend angeformt sein, insbesondere als ein im Wesentlichen zylindrischer Kragen oder ein im Wesentlichen konischer Kragen (V-förmig), der sich in Richtung des Filterabschnitts verjüngt, wobei die Konizität vorzugsweise eine Verjüngung von 2,0 mm pro 1.000 mm Länge aufweist. Über den Kragen lässt sich das Filterelement an einer Aufhängvorrichtung eines Filtermoduls befestigen. Im Falle eines konischen Kragens ist die Konizität vorzugsweise eher gering ausgeprägt. Dies genügt jedoch, das Filterelement sicher in einer Aufhängevorrichtung zu fixieren. Zudem kann wegen der geringen Abweichung von einem zylindrischen Kragen die O-Ring Festigkeit ohne Weiteres mit der im Beispielteil erörterten Messanordnung erfolgen, bei der die Prüfung mittels zweier gegenüberliegender Prüfbacken (Fixierelemente) erfolgt. Dies liegt auch daran, dass sich die Prüfbacken während der Messung leicht in die Oberfläche des Kragens eindrücken können. Im Falle eines stärker konisch ausgeprägten Kragens kann die Messanordnung auch ohne Weiteres in so weit verändert werden, dass die Prüfbacken in der Weise geneigt werden, dass diese parallel zur Oberfläche des konischen Kragens ausgerichtet sind.

Durch die spezielle Ausbildung des Filterelementes als Filterkerze kann während eines Betriebs des Filterelementes zu reinigendes Rohgas von einem Rohgasraum durch den Filterkerzenkörper in den Innenraum der Filterkerze hineinströmen. Hierbei wird das Rohgas größtenteils von Staubpartikeln und/oder Schadstoffen befreit und kann anschließend den Innenraum der Filterkerze an dessen offenem Ende verlassen und in einen Reingasraum hineinströmen.

In vorteilhafter Ausgestaltung des Filterelements kann der Kragenabschnitt und/oder der Filterabschnitt als Vakuumformteil ausgebildet sein, insbesondere als ein gebranntes oder ungebranntes Vakuumformteil enthaltend anorganische Fasern, wie Mineralwolle, Glasfasern, Aluminiumsilikatwolle, Erdalkalisilikatwolle und/oder polykristalliner Hochtemperaturwolle. Bevorzugt sind die anorganischen Fasern ausgewählt aus der Gruppe, umfassend oder bestehend aus Aluminiumsilikatwolle, Erdalkalisilikatwolle, polykristalliner Wolle, Mineralfasern, Silica-Fasern, Glasfasern, Basaltfasern, Keramikfasern oder Mischungen davon. Mittels dieser Vakuumformtechnik lassen sich auch relativ komplizierte Formteile erzeugen. In dem Vakuumformteil kann - sofern gewünscht - auch zumindest ein Katalysator eingelagert sein. Im Rahmen der Erfindung kann das Filterelement aber auch frei von Katalysatoren sein.

Neben den vorgenannten Fasermaterialien kann der Kragenabschnitt und/oder der Filterabschnitt mindestens ein Füllstoff enthalten, bevorzugt ausgewählt aus der Gruppe, umfassend oder bestehend aus Tonerde, Quarzsand, Silica, Mullit, Sillimanit, Andalusit, Siliciumcarbid, Spinell, Bariumsulfat, Borcarbid oder Mischungen davon. Der Kragenabschnitt und/oder der Filterabschnitt können aber auch ohne Füllstoff hergestellt sein.

Ferner kann der Kragenabschnitt und/oder der Filterabschnitt mindestens ein Bindemittel enthalten. Das Bindemittel kann dabei Stärke, Stärkederivate oder Cellulosederivate wie Celluloseether sowie mindestens eine kolloidale Dispersion, bevorzugt ein Kieselsol, enthalten. Für die Formung des Filterkörpers können grundsätzlich alle üblichen Formgebungsprozesse wie Spritzguss- und Vakuumformen verwendet werden, wobei Vakuumformen, insbesondere zur Erzielung einer höheren Porosität, bevorzugt ist.

In vorteilhafter Ausgestaltung des Filterelements kann zumindest im Material des Filterabschnitts ein Katalysator enthalten sein, wobei insbesondere der Gehalt an Katalysator im Material des Kragenabschnitts geringer ist, als im Filterabschnitt, wobei bevorzugt das Material des Kragenabschnitts keinen Katalysator enthält.

Als Katalysatoren kommen insbesondere solche zur Zersetzung von giftigen Gasen in Betracht, wie beispielsweise von Stickoxiden. Geeignete Katalysatoren zu diesem Zweck sind dem Fachmann bekannt. Diese basieren auf Metallverbindungen, beispielsweise ausgewählt aus der Gruppe umfassend oder bestehend aus Platin, Palladium, Ruthenium, Aluminium, Wolfram, Titan, Vanadium sowie deren Mischungen, insbesondere umfassend oder bestehend aus Titan und Vanadium sowie optional Wolfram.

Das Filterelement kann auf der Innenseite und/ oder Außenseite mit einer Katalysatorlösung imprägniert sein, vorzugsweise auf der Innenseite. Die Imprägnierung kann beispielsweise mittels Einsprühen, Pinseln, Bestreichen oder dergleichen mit gelösten oder dispergierten Metallverbindungen der vorgenannten Art erfolgen. Zudem kann der Katalysator auch während des Formgebungsprozesses in die Suspension eingebracht sein, aus der das Filterelement erzeugt wird. Diese Möglichkeiten sind beispielsweise in WO 2021/245080 A1 beschrieben.

Die eingesetzte Katalysatorlösung enthält mindestens ein Lösungsmittel und mindestens eine in dem mindestens einen Lösungsmittel gelöste oder dispergierte Metallverbindung. Als Lösungsmittel kommen alle Lösungsmittel in Frage, die in der Lage sind die geeigneten Metallverbindungen zu lösen oder zu dispergieren. Vorzugsweise werden bei der vorliegenden Erfindung protische Lösungsmittel wie Wasser, Alkohole sowie Mischungen davon eingesetzt. Besonders bevorzugte Lösungsmittel sind Wasser, Methanol, Ethanol oder Mischungen davon. Ferner können in der Katalysatorlösung weitere gängige Hilfsstoffe, wie Dispergiermittel und/oder Emulgatoren, enthalten sein.

Bei dem erfindungsgemäßen Filterelement kann der Filterkörper eine Länge von 1 bis 8 m, vorzugsweise 1 bis 6 m, weiter bevorzugt 2 bis 8 m, noch weiter bevorzugt 2 bis 6m aufweisen, und/oder der Kragenabschnitt eine Länge von 10 bis 100 cm aufweisen, vorzugsweise von 12 bis 50 cm, weiter bevorzugt 15 bis 30 cm und/oder die Abschnitte des Filterabschnitts jeweils unabhängig voneinander eine Länge von 0,5 bis 4,5 m aufweisen, vorzugsweise 1,0 bis 4,0 m.

Bei dem Filterelement der vorliegenden Erfindung kann die Länge des Kragenabschnitts 1,5 bis 30% der Länge des gesamten Filterkörpers betragen, vorzugsweise 1,8 bis 25%, besonders bevorzugt 2 bis 20 %. Besonders bevorzugte konkrete Ausgestaltungen sind bei einem 6m langen Filterelement ein Kragen mit 15 cm (=2,5%), bei einem 4m langen Filterelement ein Kragen mit 15 cm (=3,75%) und bei einem 2m langen Filterelement ein Kragen mit 15 cm (=7,5%). Die genannten Längen der Filterkerzen verstehen sich weiter bevorzugt mit einer Abweichung von etwa +/-10%.

Der Filterkörper kann einen Außendurchmesser von 30 bis 300 mm und/oder eine Wandstärke von 5 bis 30 mm besitzen, vorzugsweise von 10 bis 25 mm, wobei die Wandstärke des Kragenabschnitts außerhalb des eigentlichen Kragens im Wesentlichen gleich ist mit der Wandstärke des Filterabschnitts.

Bei dem erfindungsgemäßen Filterelement ist es ferner bevorzugt, dass das Material des Filterkörpers eine Porosität von 50 bis 90%, bestimmt nach DIN EN 993-1 - 2019-03, vorzugsweise größer als 70%, aufweist. Hierdurch kann eine hohe Filterleistung bei gleichzeitig ausreichender mechanischer Stabilität gewährleistet werden.

Besonders bevorzugt zeichnet sich das erfindungsgemäße Filterelement dadurch aus, dass der Wert der Porosität des Materials des Filterkörpers im Kragenabschnitt absolut um wenigstens 10 % niedriger ist als im Filterabschnitt, vorzugsweise absolut um wenigstens 20%. Dadurch kann die Stabilität im Kragenabschnitt besonders gesteigert werden, ohne dass die Filterleistung des gesamten Filterelements merklich reduziert wird, zumal der Kragen im Betrieb ohnehin teilweise in einer Halterung befestigt ist, sodass in diesem Bereich gar keine Gasfilterung stattfinden kann.

Die eingangs genannte Aufgabe wird im Rahmen der vorliegenden Erfindung ferner gelöst durch ein Verfahren zur Herstellung eines erfindungsgemäßen Filterelements, bei dem ein an einem Ende geschlossener und an seinem gegenüberliegenden Ende offen ausgebildeter Filterkörper gebildet wird, indem ein Kragenabschnitt an dem offenen Ende des Filterkörpers mit nach außen abstehendem angeformten Kragen an dem Kragen gegenüberliegenden Ende mit einem Filterabschnitt verbunden wird, wobei der Kragenabschnitt eine höhere O-Ring-Festigkeit aufweist als der Filterabschnitt, wobei die O-Ring-Festigkeit wie in der Beschreibung definiert bestimmt ist.

Gegenstand der vorliegenden Erfindung ist ferner die Verwendung eines Kragenabschnitts mit einer höheren O-Ring-Festigkeit als der Filterabschnitt, für ein Filterelement mit einem Filterkörper, der an einem Ende geschlossen und an seinem gegenüberliegenden Ende offen ausgebildet ist, wobei an dem offenen Ende des Filterkörpers ein nach außen abstehender Kragen angeformt ist, insbesondere für ein erfindungsgemäßes Filterelement.

Gegenstand der Erfindung ist schließlich auch die Verwendung eines erfindungsgemäßen Filterelements zur Filtration von Abgasen oder Prozessgasen, insbesondere in Form einer Filterkerze.

Die Erfindung betrifft insbesondere die folgenden Ausführungsformen:
1. Filterelement, insbesondere Filterkerze zur Filtration von Abgasen oder Prozessgasen, mit einem Filterkörper, der an einem Ende geschlossen und an seinem gegenüberliegenden Ende offen ausgebildet ist, wobei an dem offenen Ende des Filterkörpers ein nach außen abstehender Kragen angeformt ist und der Filterkörper zumindest in einen den Kragen beinhaltenden Kragenabschnitt und einen mit diesem verbundenen Filterabschnitt unterteilt ist, dadurch gekennzeichnet, dass der Kragenabschnitt eine höhere O-Ring-Festigkeit aufweist als der Filterabschnitt, wobei die O-Ring-Festigkeit wie in der Beschreibung definiert bestimmt ist.
2. Filterelement nach Ausführungsform 1, dadurch gekennzeichnet, dass der Kragenabschnitt eine um wenigstens 3% höhere O-Ring-Festigkeit aufweist als der Filterabschnitt, insbesondere um 3% bis 50%, bevorzugt um wenigstens 4%, weiter bevorzugt um wenigstens 5% höher.
3. Filterelement nach Ausführungsform 1 oder 2, dadurch gekennzeichnet, dass der Kragenabschnitt eine um wenigstens 35 N höhere O-Ring-Festigkeit aufweist als der Filterabschnitt, insbesondere um 35 bis 200 N, bevorzugt um wenigstens 40 N, weiter bevorzugt um wenigstens 45 N höher.
4. Filterelement nach einer der vorstehenden Ausführungsformen, dadurch gekennzeichnet, dass die O-Ring-Festigkeit auf dieselbe Wandstärke beim Kragenabschnitt und Filterabschnitt bezogen ist.
5. Filterelement nach einer der vorstehenden Ausführungsformen, dadurch gekennzeichnet, dass der Filterabschnitt in wenigstens zwei miteinander verbundene Abschnitte unterteilt ist.
6. Filterelement nach einer der vorstehenden Ausführungsformen, dadurch gekennzeichnet, dass die Verbindung zwischen dem Kragenabschnitt und dem Filterabschnitt und/oder der Abschnitte des Filterabschnitts untereinander mittels an ihren benachbarten Endabschnitten ausgebildeten und zueinander korrespondierenden Innen- und Außengewinden, einer Verklebung, einer gegebenenfalls mit Stiften gesicherten Steckverbindung und/oder mittels eines Bajonettverschlusses realisiert ist.
7. Filterelement nach Ausführungsform 6, dadurch gekennzeichnet, dass der Kragenabschnitt und der Filterabschnitt und/oder die Abschnitte des Filterabschnitts untereinander zusätzlich in ihren Kontaktbereichen mittels eines Klebstoffs miteinander verklebt sind.
8. Filterelement nach einer der vorstehenden Ausführungsformen, dadurch gekennzeichnet, dass das Filterelement die Form einer Filterkerze mit einem im Wesentlichen hohlzylindrischen Filterkerzenkörper aufweist, dessen geschlossenes Ende insbesondere halbkugelartig ausgebildet ist.
9. Filterelement nach einer der vorstehenden Ausführungsformen, dadurch gekennzeichnet, dass der Kragen nach außen radial abstehend angeformt ist, insbesondere als ein im Wesentlichen zylindrischer Kragen oder ein im Wesentlichen konischer Kragen (V-förmig), der sich in Richtung des Filterabschnitts verjüngt, wobei die Konizität vorzugsweise eine Verjüngung von 2,0 mm pro 1.000 mm Länge aufweist.
10. Filterelement nach einer der vorstehenden Ausführungsformen, dadurch gekennzeichnet, dass der Kragenabschnitt und/oder der Filterabschnitt als Vakuumformteil ausgebildet sind, insbesondere als ein gebranntes oder ungebranntes Vakuumformteil enthaltend Mineralwolle, Glasfasern, Aluminiumsilikatwolle, Erdalkalisilikatwolle und/oder polykristalliner Hochtemperaturwolle.
11. Filterelement nach einer der vorstehenden Ausführungsformen, dadurch gekennzeichnet, dass zumindest im Material des Filterabschnitts ein Katalysator enthalten ist, wobei insbesondere der Gehalt an Katalysator im Material des Kragenabschnitts geringer ist, als im Filterabschnitt, wobei bevorzugt das Material des Kragenabschnitts keinen Katalysator enthält.
12. Filterelement nach einer der vorstehenden Ausführungsformen, dadurch gekennzeichnet, dass der Filterkörper eine Länge von 1 bis 8 m, vorzugsweise 1 bis 6 m, weiter bevorzugt 2 bis 8 m, noch weiter bevorzugt 2 bis 6 m aufweist, und/oder der Kragenabschnitt eine Länge von 10 bis 100 cm aufweist, vorzugsweise von 12 bis 50 cm, weiter bevorzugt 15 bis 30 cm und/oder die Abschnitte des Filterabschnitts jeweils unabhängig voneinander eine Länge von 0,5 bis 4,5 m aufweisen, vorzugsweise 1,0 bis 4,0 m.
13. Filterelement nach einer der vorstehenden Ausführungsformen, dadurch gekennzeichnet, dass die Länge des Kragenabschnitts 1,5 bis 30% der Länge des gesamten Filterkörpers beträgt, vorzugsweise 1,8 bis 25%, besonders bevorzugt 2 bis 20 %.
14. Filterelement nach einer der vorstehenden Ausführungsformen, dadurch gekennzeichnet, dass der Filterkörper einen Außendurchmesser von 30 bis 300 mm und/oder eine Wandstärke von 5 bis 30 mm, vorzugsweise von 10 bis 25 mm, aufweist, wobei die Wandstärke des Kragenabschnitts außerhalb des eigentlichen Kragens im Wesentlichen gleich ist mit der Wandstärke des Filterabschnitts.
15. Filterelement nach einer der vorstehenden Ausführungsformen, dadurch gekennzeichnet, dass das Material des Filterkörpers eine Porosität von 50 bis 90%, bestimmt nach DIN EN 993-1 - 2019-03, vorzugsweise größer als 70%, aufweist.
16. Filterelement nach einer der vorstehenden Ausführungsformen, dadurch gekennzeichnet, dass der Wert der Porosität des Materials des Filterkörpers im Kragenabschnitt absolut um wenigstens 10 % niedriger ist als im Filterabschnitt, vorzugsweise absolut um wenigstens 20%.
17. Filterelement nach einer der vorstehenden Ausführungsformen, dadurch gekennzeichnet, dass die höhere O-Ring-Festigkeit des Kragenabschnitts eingestellt wird durch
   - Wahl einer höheren Dichte des Materials des Kragenabschnitts verglichen mit dem Material des Filterabschnitts,
   - Wahl eines Materials mit höherer Zugfestigkeit im Kragenabschnitt verglichen mit dem Material des Filterabschnitts,
   - Einstellung einer anderen Flockungsgröße beim Vakuumformprozess des Kragenabschnitts verglichen mit dem Material des Filterabschnitts,
   - Wahl einer höheren Füllstoffmenge für das Material des Kragenabschnitts verglichen mit dem Material des Filterabschnitts,
   - Wahl eines höheren Faseranteils für das Material des Kragenabschnitts verglichen mit dem Material des Filterabschnitts und/oder
   - Wahl eines Fasermaterials mit höherer Zugfestigkeit für das Material des Kragenabschnitts verglichen mit dem Material des Filterabschnitts.
18. Verfahren zur Herstellung eines Filterelements nach einer der Ausführungsformen 1 bis 17, bei dem ein an einem Ende geschlossener und an seinem gegenüberliegenden Ende offen ausgebildeter Filterkörper gebildet wird, indem ein Kragenabschnitt an dem offenen Ende des Filterkörpers mit nach außen abstehendem angeformten Kragen an dem Kragen gegenüberliegenden Ende mit einem Filterabschnitt verbunden wird, dadurch gekennzeichnet, dass der Kragenabschnitt eine höhere O-Ring-Festigkeit aufweist als der Filterabschnitt, wobei die O-Ring-Festigkeit wie in der Beschreibung definiert bestimmt ist.
19. Verwendung eines Kragenabschnitts mit einer höheren O-Ring-Festigkeit als der Filterabschnitt, für ein Filterelement mit einem Filterkörper, der an einem Ende geschlossen und an seinem gegenüberliegenden Ende offen ausgebildet ist, wobei an dem offenen Ende des Filterkörpers ein nach außen abstehender Kragen angeformt ist, insbesondere für ein Filterelement nach einer der Ausführungsformen 1 bis 17.
20. Verwendung eines Filterelements nach einer der Ausführungsformen 1 bis 17 zur Filtration von Abgasen oder Prozessgasen, insbesondere in Form einer Filterkerze.

### Beispiele:

Die vorliegende Erfindung wird im Folgenden anhand der Fign. 1 bis 4 sowie anhand von Ausführungs- und Vergleichsbeispielen näher erläutert. Darin zeigt
- Fig. 1:: ein erfindungsgemäßes Filterelement in Form einer Filterkerze in seitlicher Schnittdarstellung,
- Fig. 2: einen Versuchsaufbau zur Bestimmung der O-Ring-Festigkeit gemäß der Erfindung in seitlicher Darstellung,
- Fig. 3: den Versuchsaufbau aus Fig. 2 in frontaler Ansicht entlang der Linie A-A aus Fig. 2, sowie
- Fig. 4: ein erfindungsgemäßes Filterelement in Form einer Filterkerze mit konisch abstehendem Kragen (V-förmig) in seitlicher Schnittdarstellung.

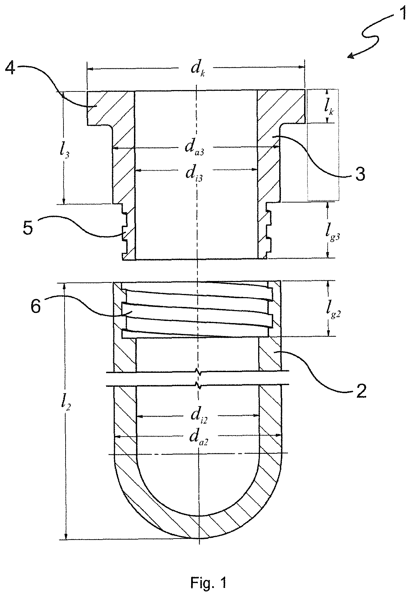

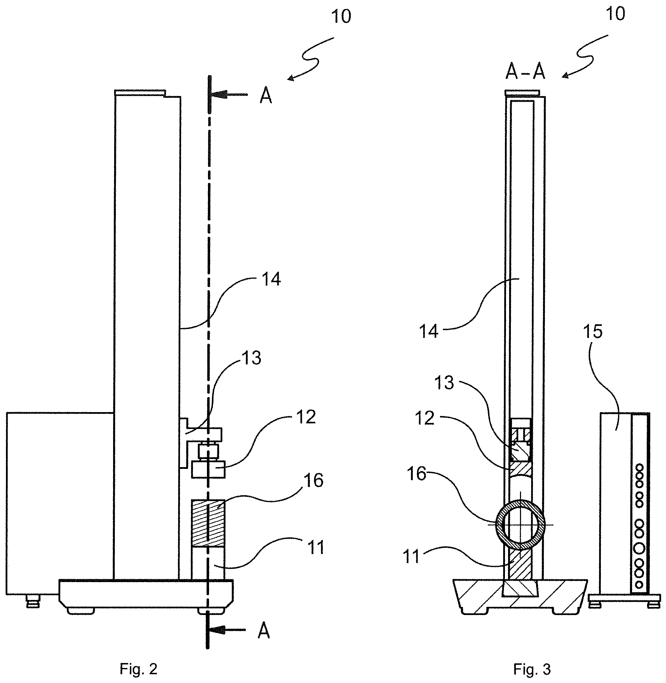

In Fig. 1 ist ein erfindungsgemäßes Filterelement 1 in Form einer Filterkerze zur Filtration von Abgasen oder Prozessgasen in seitlicher Schnittdarstellung abgebildet. Die Filterkerze 1 ist zweiteilig ausgebildet und setzt sich aus einem Filterabschnitt 2 und einem Kragenabschnitt 3 zusammen, wobei der Filterkörper eine hohlzylindrische Form aufweist und an einem Ende halbkugelartig geschlossen und an seinem gegenüberliegenden Ende offen ausgebildet ist. Der Kragenabschnitt 3 und der Filterabschnitt 2 sind als Vakuumformteil aus den weiter unten näher beschriebenen Rohstoffen ausgebildet. Der Kragenabschnitt 3 weist eine höhere O-Ring-Festigkeit auf als der Filterabschnitt 3, wobei die O-Ring-Festigkeit wie im Folgenden anhand des Versuchsaufbaus gemäß Fig. 2 bestimmt ist.

An dem Kragenabschnitt 3 ist ein nach außen radial abstehender zylindrischer Kragen 4 angeformt. Zur Verbindung zwischen dem Kragenabschnitt 3 und dem Filterabschnitt 2 ist an dem Kragenabschnitt 3 ein Außengewinde 5 und an dem Filterabschnitt 2 ein hiermit korrespondierendes Innengewinde 6 vorgesehen. Bei der Verbindung von Kragenabschnitt 3 und der Filterabschnitt 2 können Innengewinde 6 und Außengewinde 5 im Kontaktbereichen zusätzlich noch mittels eines Klebstoffs miteinander verklebt sein.

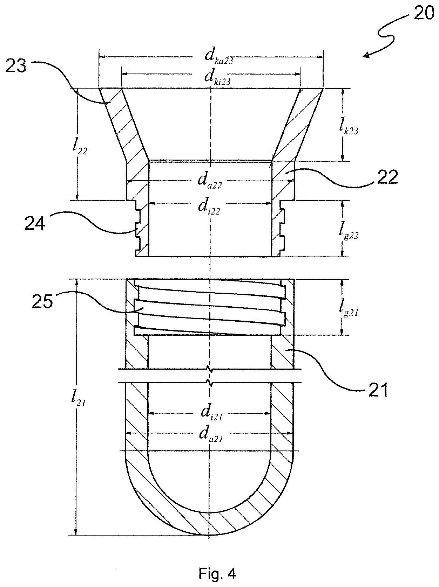

In Fig. 4 ist eine weitere Ausführungsform eines erfindungsgemäßen Filterelement 20 in Form einer Filterkerze zur Filtration von Abgasen oder Prozessgasen in seitlicher Schnittdarstellung abgebildet. Die hier gezeigte Ausführung unterscheidet sich von der in Fig. 1 gezeigten Filterkerze 1 im Kragenabschnitt 22 mit konisch abstehendem, also V-förmig ausgebildetem, Kragen 23. Der Filterabschnitt 21, das Außengewinde 24 und das Innengewinde 25 entsprechen den jeweils korrespondierden Elementen wie in Fig.1 gezeigt. Dasselbe glit für die angegebenen Durchmesser-und Längenangaben, die jeweils mit dem entsprechenden Bauteilindex versehen sind. Bei einer Filterkerze 20 gemäß der Fig. 4 können beispielsweise folgende Maße realisiert werden:
Durchmesser am Kragen 23 außen dₖₐ₂₃ [mm]: 200
Durchmesser am Kragen 23 innen dₖᵢ₂₃ [mm]: 160
Länge des Kragens 23 Iₖ₂₃ [mm]: 65
Durchmesser des Kragenabschnitts 22 unterhalb des Kragens 23 außen dₐ₂₂ [mm]: 150
Durchmesser des Kragenabschnitts 22 innen dᵢ₂₂ [mm]: 110
Wandstärke des Kragenabschnitts 22 dₐ₂₂ - dᵢ₂₂ [mm]: 20
Länge des Kragenabschnitts 22 I₂₂ ohne Außengewinde 24 [mm]: 100
Länge des Außengewindes 24 des Kragenabschnitts 22 I_{g22} [mm]: 50

Die Maße des Filterabschnitts 21:
Durchmesser außen dₐ₂₁, [mm]: 150
Durchmesser innen dᵢ₂₁ [mm]: 110
Wandstärke des Filterabschnitts 21 dₐ₂₁ - dᵢ₂₁ [mm]: 20
Länge des Filterabschnitts 21 I₂₁ [mm]: 100
Länge des Innengewindes 25 des Filterabschnitts 21 I_{g21} [mm]: 50

Bei den folgenden Ausführungs- und Vergleichsbeispielen wurden Kragenabschnitte 3 für Filterelemente 1 gemäß der in Fig. 1 gezeigten Ausführungsform mit identischen Geometrien aus unterschiedlichen Zusammensetzungen erzeugt. Die Maße der Kragenabschnitte 3 waren dabei wie folgt:
Durchmesser am Kragen 4 außen dₖ [mm]: 195
Länge des Kragens 4 Iₖ [mm]: 30
Durchmesser des Kragenabschnitts 3 unterhalb des Kragens 4 außen dₐ₃ [mm]: 150
Durchmesser des Kragenabschnitts 3 innen dᵢ₃ [mm]: 110
Wandstärke des Kragenabschnitts 3 dₐ₃ - dᵢ₃ [mm]: 20
Länge des Kragenabschnitts 3 I₃ ohne Außengewinde 5 [mm]: 100
Länge des Außengewindes 5 des Kragenabschnitts 3 I_{g3} [mm]: 50

Die Maße des Filterabschnitts 2 waren dabei wie folgt:
Durchmesser außen dₐ₂ [mm]: 150
Durchmesser innen dᵢ₂ [mm]: 110
Wandstärke des Filterabschnitts 2 dₐ₂ - dᵢ₂ [mm]: 20
Länge des Filterabschnitts 2 I₂ [mm]: 100
Länge des Innengewindes 6 des Filterabschnitts 2 I_{g2} [mm]: 50

Hierbei kamen die folgenden Rohstoffe zum Einsatz:

| | |
|---|---|
| Faser 1: | Alsitra NCK; RATH Mönchengladbach, Krefelder Str. 680/682, 41066 Mönchengladbach; NCK, Siebgröße der Choppanlage 50mm |
| Faser 2: | Altra B72 C25; RATH Mönchengladbach, Krefelder Str. 680/682, 41066 Mönchengladbach |
| Füllstoff: | Martoxid DN-206; Huber Advanced Materials, Martinswerk GmbH, Kölner Str. 110, 50127 Bergheim |
| Bindemittel: | Köstrosol 1540 KD; Chemiewerk Bad Köstritz GmbH, Heinrichshall 2, 07586 Bad Köstritz, |
| Flockhilfsmittel: | Solvitose PLV (Avebe); Avebe, Prins Hendrikplein 20, 9641 GK Veendam, Niederlande |

Die Kragenabschnitte für Filterelemente wurden dabei in der Weise erzeugt, dass die Einsatzstoffe miteinander zu einer Slurry vermischt und auf einer Vakkuumformmaschine zu entsprechenden Rohlingen ausgeformt Dazu wurde zuerst die Faser im Wasser mittels Rührwerkzeugen dispergiert und anschließend die Füllstoffe und das Bindemittel zugegeben. Nachdem diese durch weiteres Rühren homogen in die Suspension eingebracht wurde, wird das Flockhilfsmittel zugesetzt. Dieses Flockhilfsmittel wird dann für 8 Minuten gerührt, sodass es seiner Aufgabe, die Flockenbildung, nachkommen kann. Dies liegt daran, da das Flockhilfsmittel von einem festen in einen gelösten / teilgelösten Zustand übergehen muss. Die Rührzeiten der vorherigen Schritte müssen nur so lange sein, dass der benötigte Effekt, dispergieren und homogenisieren, eintreten kann. Ein zu langes Rühren bei diesen Schritten kann nicht vorkommen, da es sich hierbei um unlösliche, anorganischen Feststoffe handelt. Nach dem Erreichen der Flockzeit wird die fertige Suspension in die Formgebungswanne abgelassen. Weitere Details zur Herstellung sind in DE 10 2021 114 190 A1 beschrieben, insbesondere in den Abschnitten [0013] bis [0024]. Die Zusammensetzungen der einzelnen Versuche sind in der folgenden Tabelle zusammengefasst:

| | Angabe in Gew.-Teilen | | | | | | |
|---|---|---|---|---|---|---|---|
| | Faser 1 | Faser 2 | Füllstoff | Bindemittel | Flockhilfsmittel | Wasser | Gewicht [kg] |
| Versuch 1 (Vgl.) | 1 | 0 | 0 | 0,3 | 0,07 | 260 | 0,3 |
| Versuch 2 (Erf.) | 1 | 0 | 0 | 0,3 | 0,07 | 130 | 0,28 |
| Versuch 3 (Vgl.) | 1 | 0 | 0,15 | 0,3 | 0,07 | 130 | 0,29 |
| Versuch 4 (Erf.) | 1 | 0 | 0,3 | 0,3 | 0,07 | 130 | 0,32 |
| Versuch 5 (Vgl.) | 0 | 1 | 0 | 0,3 | 0,07 | 260 | 0,16 |
| Versuch 6 (Erf.) | 0 | 1 | 0 | 0,3 | 0,07 | 130 | 0,18 |

Bei den Paarungen stellen jeweils die Versuche 1 und 2, 3 und 4, sowie 5 und 6 den Vergleich zwischen herkömmlichem Material für die Krägen (1, 3 und 5) und den erfindungsgemäßen (2, 4 und 6) mit vergleichbarer Rezeptur, aber erhöhter O-Ring Festigkeit dar. Den Paarungen liegt dabei folgende Versuchsstrategie zugrunde:

| | Erklärung |
|---|---|
| Versuch 1 | ohne Füllstoff, andere Flockungsgröße |
| Versuch 2 | ohne Füllstoff |
| Versuch 3 | mit Füllstoff |
| Versuch 4 | mehr Füllstoff |
| Versuch 5 | ohne Füllstoff, andere Faser, andere Flockungsgröße |
| Versuch 6 | ohne Füllstoff, andere Faser |

Aus den vorstehenden Tabellen ist erkennbar, dass bei den Versuchen 5 und 6 aufgrund der anderen Faser andere Gewichte erreicht werden. Die Flockungsgröße wurde über das Verhältnis Wasser zu Feststoff eingestellt. Während bei den Versuchen 1 und 5 260 Einheiten Wasser verwendet wurden, waren dies bei den anderen Versuchen 130 Einheiten. Dadurch ergibt sich eine andere Flockungsgröße. Die Flockung wird bei dieser Faser allgemein größer, da die Faser stabiler ist und bei gleichen Mischzeiten nicht so zerkleinert wird. Daraus erklärt sich das geringere Gewicht.

Die O-Ring Festigkeit wurde dabei folgendermaßen an den erzeugten Krägen bestimmt:
Die Prüfmaschine ist eine ZwickRoell zwickiLine Z2.5 TN. Die Prüfbacken (Fixierelemente), in welchen die Probekörper eingelegt werden, haben eine horizontale Breite von 60mm und eine Tiefe von 60 mm, wobei über die Breite ein Radius von 92,5 mm ausgeführt ist, in welche die Probe eingelegt wird.

Die Proben, welche eine Länge von 100mm besitzen, werden mittig in die Prüfmaschine eingelegt und das Prüfprogramm wird gestartet. Der Ablauf des Prüfprogrammes ist wie folgt:
1. Die Prüfbacken schließen sich, bis ein Vordruck von 1,5N auf den Prüfkörper erreicht ist.
2. Die Prüfbacken fahren mit einer Geschwindigkeit von 200 mm/min zusammen, bis der Bruch des Bauteils erfolgt ist.

Während dem gesamten Prüfvorgang wird die auftretende Kraft aufgenommen. Dabei wird die auftretende Maximalkraft als O-Ring-Festigkeit definiert.

Das Einlegen der Proben erfolgt dabei so, dass die Probe nur in vertikaler Richtung radial auf die Probe belastet wird. Eine externe Belastung in Längsrichtung sowie von weiteren Richtungen, außer der bereits genannten vertikalen Richtung radial auf die Probe, wird nicht vorgenommen.

In Fign. 2 und 3 ist eine solche Prüfanordnung/ Prüfmaschine 10 schematisch gezeigt. In Fig. 2 ist die Prüfmaschine 10 in seitlicher Darstellung zu sehen und in Fig. 3 entlang der Linie A-A aus Fig. 2 in frontaler Ansicht. Die Prüfmaschine 10 besitzt zwei Prüfbacken 11, 12, von denen die untere Prüfbacke 11 fixiert und die obere Prüfbacke 12 an einem vertikal verfahrbaren Schlitten 13 befestigt ist, welcher in einer Führung 14 der Prüfmaschine 10 sitzt. Die Prüfbacken 11, 12 sind wie vorbeschrieben dimensioniert, wobei der Radius halbschalenförmig ausgestaltet ist, damit der zylindrische Probenkörper 16 an den Prüfbacken 11, 12 anliegt. Der Prüfmaschine 10 ist ferner eine Bedienkonsole 15 zugeordnet, mit der die Messung gesteuert und die O-Ring-Festigkeit nach erfolgter Messung abgelesen werden kann. Zur Messung der O-Ring-Festigkeit wird der Probenkörper, also das zu untersuchende Segment 16 einer Filterkerze 1, in seiner Längsachse horizontal zwischen die Prüfbacken 11, 12 eingelegt und die Messung an der Bedienkonsole 15 gestartet. Zur Erzeugung des Probenkörpers 16 wird das zu untersuchende Teilstück der Filterkerze 1, also beispielsweise der Kragen 4 oder ein Teil des Filterabschnitts 2 aus der Filterkerze 1 in der vorgenannten Länge herausgesägt.

Hierbei ergaben sich die folgenden Ergebnisse:

| | Vorkraft [N] | Prüfgeschwindigkeit [mm/min] | O-Ring-Festigkeit [N] | Δ_{ORing} (%) | Δ_{ORing} (abs) |
|---|---|---|---|---|---|
| Versuch 1 | 1,5 | 200 | 670 | | |
| Versuch 2 | 1,5 | 200 | 720 | 6,94% | 50 |
| Versuch 3 | 1,5 | 200 | 805 | | |
| Versuch 4 | 1,5 | 200 | 877 | 8,21% | 72 |
| Versuch 5 | 1,5 | 200 | 448 | | |
| Versuch 6 | 1,5 | 200 | 572 | 21,68% | 124 |

Die Ergebnisse zeigen, dass die O-Ring Festigkeit der Kragenabschnitte mit den verschiedenen gezeigten Möglichkeiten erhöht werden kann, sodass der Kragenabschnitt gegenüber dem jeweiligen Vergleichsbeispiel gezielt erhöht werden kann. Der restliche Teil des Filterelements, also der eigentliche Filterkörper, kann dann beispielsweise aus der Rezeptur des jeweiligen Vergleichsbeispiels hergestellt sein. Dies hat den Vorteil, dass beispielsweise das thermische Ausdehnungsverhalten von Kragen und Filterabschnitt wegen der ansonsten hohen Übereinstimmungen in der Rezeptur sehr ähnlich ist und thermisch ausgelöste Materialspannungen zwischen Kragen und Filterabschnitt gering gehalten werden können.

### Bezugszeichenliste:

- 1: Filterelement, Filterkerze
- 2: Filterabschnitt
- 3: Kragenabschnitt
- 4: Kragen
- 5: Außengewinde
- 6: Innengewinde
- 10: Prüfmaschine
- 11: Prüfbacke (unteres Fixierelement)
- 12: Prüfbacke (oberes Fixierelement)
- 13: vertikal verfahrbarer Schlitten
- 14: Führung
- 15: Bedienkonsole
- 16: Probenkörper
- 20: Filterelement, Filterkerze
- 21: Filterabschnitt
- 22: Kragenabschnitt
- 23: Kragen
- 24: Außengewinde
- 25: Innengewinde

## Patentansprüche

1. Filterelement (1), insbesondere Filterkerze zur Filtration von Abgasen oder Prozessgasen, mit einem Filterkörper, der an einem Ende geschlossen und an seinem gegenüberliegenden Ende offen ausgebildet ist, wobei an dem offenen Ende des Filterkörpers ein nach außen abstehender Kragen (4) angeformt ist und der Filterkörper zumindest in einen den Kragen (4) beinhaltenden Kragenabschnitt (3) und einen mit diesem verbundenen Filterabschnitt (2) unterteilt ist,
**dadurch gekennzeichnet, dass**
der Kragenabschnitt (3) eine höhere O-Ring-Festigkeit aufweist als der Filterabschnitt (2), wobei die O-Ring-Festigkeit wie in der Beschreibung definiert bestimmt ist.

2. Filterelement nach Anspruch 1, **dadurch gekennzeichnet, dass** der Kragenabschnitt (3) eine um wenigstens 3% höhere O-Ring-Festigkeit aufweist als der Filterabschnitt (2), insbesondere um 3% bis 50%, bevorzugt um wenigstens 4%, weiter bevorzugt um wenigstens 5% höher.

3. Filterelement nach Anspruch 1 oder 2, **dadurch gekennzeichnet, dass** der Kragenabschnitt (3) eine um wenigstens 35 N höhere O-Ring-Festigkeit aufweist als der Filterabschnitt (2), insbesondere um 35 bis 200 N, bevorzugt um wenigstens 40 N, weiter bevorzugt um wenigstens 45 N höher.

4. Filterelement nach einem der vorstehenden Ansprüche, **dadurch gekennzeichnet, dass** die O-Ring-Festigkeit auf dieselbe Wandstärke beim Kragenabschnitt (3) und Filterabschnitt (2) bezogen ist.

5. Filterelement nach einem der vorstehenden Ansprüche, **dadurch gekennzeichnet, dass** der Filterabschnitt (2) in wenigstens zwei miteinander verbundene Abschnitte unterteilt ist.

6. Filterelement nach einem der vorstehenden Ansprüche, **dadurch gekennzeichnet, dass** die Verbindung zwischen dem Kragenabschnitt (3) und dem Filterabschnitt (2) und/oder der Abschnitte des Filterabschnitts (2) untereinander mittels an ihren benachbarten Endabschnitten ausgebildeten und zueinander korrespondierenden Innen- und Außengewinden (5, 6), einer Verklebung, einer gegebenenfalls mit Stiften gesicherten Steckverbindung und/oder mittels eines Bajonettverschlusses realisiert ist, wobei vorzugsweise der Kragenabschnitt (3) und der Filterabschnitt (2) und/oder die Abschnitte des Filterabschnitts (2) untereinander zusätzlich in ihren Kontaktbereichen mittels eines Klebstoffs miteinander verklebt sind.

7. Filterelement nach einem der vorstehenden Ansprüche, **dadurch gekennzeichnet, dass** der Kragen (4) nach außen radial abstehend angeformt ist, insbesondere als ein im Wesentlichen zylindrischer Kragen (4) oder ein im Wesentlichen konischer Kragen (4), der sich in Richtung des Filterabschnitts (2) verjüngt, wobei die Konizität vorzugsweise eine Verjüngung von 2,0 mm pro 1.000 mm Länge aufweist.

8. Filterelement nach einem der vorstehenden Ansprüche, **dadurch gekennzeichnet, dass** zumindest im Material des Filterabschnitts (2) ein Katalysator enthalten ist, wobei insbesondere der Gehalt an Katalysator im Material des Kragenabschnitts (3) geringer ist, als im Filterabschnitt (2), wobei bevorzugt das Material des Kragenabschnitts (3) keinen Katalysator enthält.

9. Filterelement nach einem der vorstehenden Ansprüche, **dadurch gekennzeichnet, dass** der Filterkörper (1) eine Länge von 1 bis 8 m, vorzugsweise 1 bis 6 m, weiter bevorzugt 2 bis 8 m, noch weiter bevorzugt 2 bis 6 m aufweist, und/oder der Kragenabschnitt (3) eine Länge von 10 bis 100 cm aufweist, vorzugsweise von 12 bis 50 cm, weiter bevorzugt 15 bis 30 cm und/oder die Abschnitte des Filterabschnitts (2) jeweils unabhängig voneinander eine Länge von 0,5 bis 4,5 m aufweisen, vorzugsweise 1,0 bis 4,0 m und/ oder dass die Länge des Kragenabschnitts (3) 5 bis 30% der Länge des gesamten Filterkörpers beträgt, vorzugsweise 1,8 bis 25%, besonders bevorzugt 2 bis 20 %.

10. Filterelement nach einem der vorstehenden Ansprüche, **dadurch gekennzeichnet, dass** das Material des Filterkörpers eine Porosität von 50 bis 90%, bestimmt nach DIN EN 993-1 - 2019-03, vorzugsweise größer als 70%, aufweist.

11. Filterelement nach einem der vorstehenden Ansprüche, **dadurch gekennzeichnet, dass** der Wert der Porosität des Materials des Filterkörpers im Kragenabschnitt (3) absolut um wenigstens 10 % niedriger ist als im Filterabschnitt (2), vorzugsweise absolut um wenigstens 20%.

12. Filterelement nach einem der vorstehenden Ansprüche, **dadurch gekennzeichnet, dass** die höhere O-Ring-Festigkeit des Kragenabschnitts (3) eingestellt wird durch
• Wahl einer höheren Dichte des Materials des Kragenabschnitts (3) verglichen mit dem Material des Filterabschnitts (2),
• Wahl eines Materials mit höherer Zugfestigkeit im Kragenabschnitt (3) verglichen mit dem Material des Filterabschnitts (2),
• Einstellung einer anderen Flockungsgröße beim Vakuumformprozess des Kragenabschnitts (3) verglichen mit dem Material des Filterabschnitts (2),
• Wahl einer höheren Füllstoffmenge für das Material des Kragenabschnitts (3) verglichen mit dem Material des Filterabschnitts (2),
• Wahl eines höheren Faseranteils für das Material des Kragenabschnitts (3) verglichen mit dem Material des Filterabschnitts (2) und/oder
• Wahl eines Fasermaterials mit höherer Zugfestigkeit für das Material des Kragenabschnitts (3) verglichen mit dem Material des Filterabschnitts (2).

13. Verfahren zur Herstellung eines Filterelements nach einem der Ansprüche 1 bis 12, bei dem ein an einem Ende geschlossener und an seinem gegenüberliegenden Ende offen ausgebildeter Filterkörper gebildet wird, indem ein Kragenabschnitt (3) an dem offenen Ende des Filterkörpers mit nach außen abstehendem angeformten Kragen (4) an dem Kragen (4) gegenüberliegenden Ende mit einem Filterabschnitt (2) verbunden wird,
**dadurch gekennzeichnet, dass**
der Kragenabschnitt (3) eine höhere O-Ring-Festigkeit aufweist als der Filterabschnitt (2), wobei die O-Ring-Festigkeit wie in der Beschreibung definiert bestimmt ist.

14. Verwendung eines Kragenabschnitts (3) mit einer höheren O-Ring-Festigkeit als der Filterabschnitt (2), für ein Filterelement mit einem Filterkörper, der an einem Ende geschlossen und an seinem gegenüberliegenden Ende offen ausgebildet ist, wobei an dem offenen Ende des Filterkörpers ein nach außen abstehender Kragen (4) angeformt ist, insbesondere für ein Filterelement nach einem der Ansprüche 1 bis 12.

15. Verwendung eines Filterelements nach einem der Ansprüche 1 bis 12 zur Filtration von Abgasen oder Prozessgasen, insbesondere in Form einer Filterkerze (1).
